(19) Europäisches Patentamt
European Patent Office
Office européen des brevets

(11) EP 3 878 898 A1

(12) EUROPEAN PATENT APPLICATION
published in accordance with Art. 153(4) EPC

(43) Date of publication:
15.09.2021 Bulletin 2021/37

(51) Int Cl.:
C08J 9/28 (2006.01)   H01M 2/16 (2006.01)

(21) Application number: 19881162.2

(22) Date of filing: 08.11.2019

(86) International application number:
PCT/JP2019/044011

(87) International publication number:
WO 2020/096061 (14.05.2020 Gazette 2020/20)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 09.11.2018 JP 2018211518
09.11.2018 JP 2018211519

(71) Applicant: Toray Industries, Inc.
Tokyo, 103-8666 (JP)

(72) Inventors:
• NAKASHIMA, Ryota
Nasushiobara-shi, Tochigi 329-2763 (JP)
• TANAKA, Hiroko
Nasushiobara-shi, Tochigi 329-2763 (JP)
• TOYOTA, Naoki
Nasushiobara-shi, Tochigi 329-2763 (JP)
• KUMA, Takuya
Nasushiobara-shi, Tochigi 329-2763 (JP)
• ISHIHARA, Takeshi
Nasushiobara-shi, Tochigi 329-2763 (JP)

(74) Representative: Mewburn Ellis LLP
Aurora Building
Counterslip
Bristol BS1 6BX (GB)

(54) **POROUS POLYOLEFIN FILM, CELL SEPARATOR, AND SECONDARY CELL**

(57) The present invention relates to a porous polyolefin film in which the peak temperature of tan δ of the dynamic viscoelasticity thereof measured at a frequency of 1 Hz, a temperature increase rate of 5°C/minute, and a strain rate of 0.1%/second is 105°C or greater in at least one of the MD direction (machine direction) and the TD direction (transverse direction). This porous polyolefin film is not prone to short circuiting due to foreign matter even when reduced in thickness, and also has excellent shape stability against high temperature or high tension.

FIG. 1

**Description**

TECHNICAL FIELD

The present invention relates to a porous polyolefin film, a battery separator, and a secondary battery excellent in safety.

BACKGROUND ART

In recent years, in addition to the tendency of weight reduction and miniaturization of electrochemical batteries for enhancing the portability of electronic devices, there is a tendency to require high-output and large-capacity batteries for use in electric vehicles and the like. For separators used in such batteries, high permeability is required for high output, film thinning is required for high capacity, strong mechanical strength that prevents short circuits due to foreign matters even with thin films is required, and a small pore diameter that can withstand expansion of electrodes during charging and discharging is required. Further, in order to improve the productivity of high-output batteries, it is required to have excellent morphological stability at high temperature or high tension.

Patent Literature 1 discloses a method of adding a certain amount of a high density polyethylene having a viscosity average molecular weight of 1 million or more to a high density polyethylene in order to obtain high strength and low heat shrinkage, and stretching and relaxing the polyethylene during a heat treatment.

Patent Literature 2 discloses a method of adding an ultra-high molecular weight polyethylene having a high melting point and a viscosity average molecular weight of 1 million or more to a high density polyethylene in order to improve mechanical strength and heat resistance.

CITATION LIST

PATENT LITERATURE

Patent Literature 1: JP 2016-507877 A
Patent Literature 2: JP 2017-165938 A

SUMMARY OF INVENTION

TECHNICAL PROBLEM

However, although sufficient strength can be obtained by the method described in Patent Literature 1, there are cases where heat resistance is insufficient in the future. In addition, there are cases where the ultra-high molecular weight polyethylene having a high melting point described in Patent Literature 2 has low solubility in liquid paraffin, and since the molecular chains are not uniformly dispersed, a fine pore structure cannot be formed, making it difficult to produce a small pore diameter film.

The present invention has been made to solve the above problems, and an object thereof is to provide a porous polyolefin film that is less likely to cause a short circuit due to foreign matters even when thinned and used as a separator for high-power and high-capacity batteries in the future, and has excellent morphological stability against high temperature and high tension.

SOLUTION TO PROBLEM

As a result of diligent studies to solve the above problems, the present inventors have found that when a peak temperature of tan $\delta$ of a dynamic viscoelasticity measured at a frequency of 1 Hz, a temperature rising rate of 5°C/min, and a strain rate of 0.1%/sec is set to be 105°C or higher in at least one direction, a porous polyolefin film having a fine pore structure with improved heat shrinkage and mechanical strength is obtained. Thus, the present invention has been completed.

In order to solve the above problems, the following configurations are adopted in the present invention. That is,

(1) A porous polyolefin film, in which a peak temperature of tan $\delta$ of a dynamic viscoelasticity measured at a frequency of 1 Hz, a temperature rising rate of 5°C/min, and a strain rate of 0.1%/sec is 105°C or higher in at least one direction of a MD direction (machine direction) and a TD direction (transverse direction).

(2) The porous polyolefin film according to (1), in which the peak temperature of the tan $\delta$ is 107°C or higher in at least one direction of the MD direction (machine direction) and the TD direction (transverse direction).

(3) The porous polyolefin film according to (1) or (2), in which a peak value of the tan $\delta$ is 0.45 or more and 0.60 or less in at least one direction of the MD direction (machine direction) and the TD direction (transverse direction).

(4) The porous polyolefin film according to any one of (1) to (3), in which a maximum flow pore diameter is 10 nm or more and 50 nm or less.

(5) The porous polyolefin film according to any one of (1) to (4), in which an average pore diameter of a surface obtained by image analysis is 10 nm or more and 100 nm or less.

(6) The porous polyolefin film according to any one of (1) to (5), in which puncture strength in terms of a porosity of 50% and a film thickness of 20 $\mu$m is 5.5 N or more.

(7) The porous polyolefin film according to any one of (1) to (6), in which an average tensile strength at break, which is an average value of a tensile strength at break in the machine direction (MD direction) and a tensile strength at break in the transverse direction (TD direction), is 140 MPa or more, an average tensile elongation at break, which is an average value of a tensile elongation at break in the MD direction and a tensile elongation at break in the TD direction, is 90% or more, and the average tensile strength at break (MPa) $\times$ the average tensile elongation at break (%) is 15,000 (MPa$\times$%) or more.

(8) The porous polyolefin film according to any one of (1) to (7), in which the porosity is 40% or more.

(9) The porous polyolefin film according to any one of (1) to (8), in which a maximum melt shrinkage rate in the transverse direction (TD direction) is 1% or more and 25% or less.

(10) The porous polyolefin film according to any one of (1) to (9), including a polyethylene resin as a main component.

(11) The porous polyolefin film according to (10), in which the polyethylene resin is a mixture of a high density polyethylene resin and an ultra-high molecular weight polyethylene resin.

(12) The porous polyolefin film according to (11), in which the ultra-high molecular weight polyethylene resin has a melting point of 140°C or higher.

(13) A battery separator using the porous polyolefin film according to any one of (1) to (12).

(14) A secondary battery using the battery separator according to (13).

ADVANTAGEOUS EFFECTS OF INVENTION

The porous polyolefin film of the present invention is superior to a related porous polyolefin film in a well-balanced manner in mechanical strength such as puncture strength and in morphological stability against heat. Therefore, in the present invention, it is possible to provide a porous polyolefin film that is less likely to cause a short circuit due to foreign matters even when thinned and used as a separator for high-power and high-capacity batteries in the future, and has excellent morphological stability against high temperature and high tension.

BRIEF DESCRIPTION OF DRAWINGS

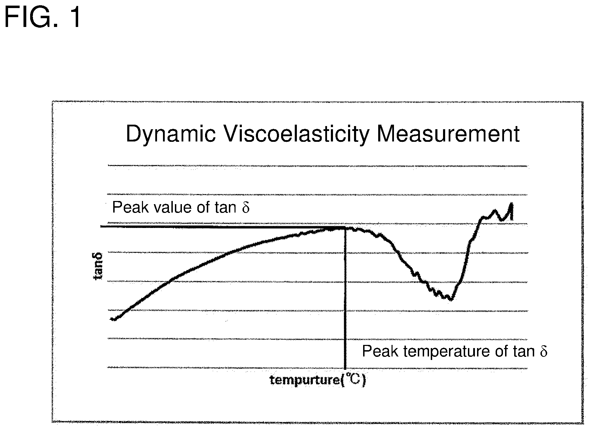

[FIG. 1] FIG. 1 shows an example of a result of dynamic viscoelasticity measurement of a porous polyolefin film.

DESCRIPTION OF EMBODIMENTS

1. Porous Polyolefin Film

The present invention will be described below. The porous polyolefin film of the present invention has a peak temperature of tan $\delta$ obtained in dynamic viscoelasticity measurement of 105°C or higher in at least one direction of a MD direction (machine direction) and a TD direction (transverse direction).

The tan $\delta$ obtained in the dynamic viscoelasticity measurement (hereinafter, may be simply referred to as "tan $\delta$") referred to here is a value obtained when the dynamic viscoelasticity is measured at a frequency of 1 Hz, a temperature rising rate of 5°C/min, and a strain rate of 0.1%/sec, and can be obtained by a ratio (E"/E') of loss elastic modulus (E") to storage elastic modulus (E'). In addition, the peak temperature of the tan $\delta$ refers to a temperature at which the tan $\delta$ is a maximum value when the measurement is performed from 30°C to 140°C. FIG. 1 shows an example of a result of dynamic viscoelasticity measurement of a porous polyolefin film.

The MD direction (machine direction) refers to a direction in which the film is extruded when forming the porous polyolefin film of the present invention, and the TD direction (transverse direction) refers to a direction orthogonal to the MD direction on the film.

The porous polyolefin film of the present invention is characterized in that the peak temperature of the tan $\delta$ is 105°C or higher in at least one direction of the MD direction and the TD direction. The peak temperature of the tan $\delta$ is preferably 107°C or higher, and more preferably 109°C or higher.

In the case where the peak temperature of the tan $\delta$ is high, relaxation of the internal structure of the porous polyolefin film can be prevented, so that the porous polyolefin film can be made excellent in morphological stability against heat. Therefore, the peak temperature of tan $\delta$ is preferably high from the viewpoint of heat resistance, and in the case where the main component of the porous polyolefin film of the present invention is a polyethylene resin, the upper limit thereof is about 135°C. The peak temperature of the tan $\delta$ of the porous polyolefin film of the present invention can be adjusted by crystallinity and a melting point of a raw material resin, and kneading conditions, a stretching ratio, and a stretching method for the resin. Details will be described later.

In the porous polyolefin film of the present invention, a peak value of the tan $\delta$ is preferably 0.45 or more and 0.60 or less in at least one direction of the MD direction and the TD direction in order to obtain satisfactory mechanical strength. In terms of the lower limit, the peak value of the tan $\delta$ is more preferably 0.48 or more, still more preferably 0.50 or more, and particularly preferably 0.52 or more. In terms of the upper limit, the peak value of the tan $\delta$ is more preferably 0.58 or less.

In the case where the peak value of the tan $\delta$ is less than 0.45, satisfactory heat resistance, that is, low heat shrinkage can be obtained, but the mechanical strength deteriorates. In the case where the peak value of the tan $\delta$ is more than 0.60, satisfactory mechanical strength can be obtained, but excellent heat shrinkage, which is a trade-off with the mechanical strength, cannot be obtained. The peak value of the tan $\delta$ can be adjusted by the crystallinity and the melting point of the raw material resin, and the kneading conditions, the stretching ratio, and the stretching method for the resin. Details will be described later.

In the present invention, puncture strength in terms of a porosity of 50% and a film thickness of 20 $\mu$m is a value L2 obtained by a formula: L2 = (L1 × 20)/T1 × 50/(100 - PI), in which L1 represents the puncture strength (N), T1 represents the film thickness ($\mu$m), and PI represents the porosity (%). The puncture strength in terms of a porosity of 50% and a film thickness of 20 $\mu$m is preferably 5.5 N or more, more preferably 5.8 N or more, still more preferably 6.0 N or more, most preferably 6.5 N or more, and remarkably preferably 7.0 N or more.

When the puncture strength in terms of a porosity of 50% and a film thickness of 20 $\mu$m is less than 5.5 N, cracks or the like are likely to occur when a sharp portion of a coating material or an electrode material pierces the porous polyolefin film, or a distance between electrodes becomes short and a local short circuit is likely to occur when a thin film is formed. The puncture strength in terms of a porosity of 50% and a film thickness of 20 $\mu$m is preferably high, and considering the limit strength of the porous polyolefin film, the upper limit of the puncture strength of the porous polyolefin film of the present invention is 30 N.

The puncture strength in terms of a porosity of 50% and a film thickness of 20 $\mu$m of the porous polyolefin film of the present invention can be adjusted by the crystallinity and the melting point of the raw material resin, and the kneading conditions, the stretching ratio, and the stretching method for the resin. In the case where the appearance is not excellent since the unmelted resin is scattered on the porous polyolefin film, or uneven heating causes unevenness during stretching and heat treatment, the puncture strength in terms of a porosity of 50% and a film thickness of 20 $\mu$m deteriorates.

The porous polyolefin film of the present invention preferably has an average value (hereinafter referred to as "average tensile strength at break") of tensile strength at break in the MD direction and tensile strength at break in the TD direction of 140 MPa or more. The average tensile strength at break is more preferably 150 MPa or more, and still more preferably 180 MPa or more. In the case where the average tensile strength at break is 140 MPa or more, the film is less likely to break and fine pores are less likely to be crushed even when hot-pressed at high pressure in a battery production process. The upper limit of the average tensile strength at break is preferably 400 MPa or less. The tensile strength at break of the porous polyolefin film of the present invention can be adjusted by the crystallinity and the melting point of the raw material resin, and the kneading conditions, the stretching ratio, and the stretching method for the resin. In the case where the appearance is not excellent since the unmelted resin is scattered on the porous polyolefin film, or uneven heating causes unevenness during stretching and heat treatment, the average tensile strength at break deteriorates.

In order to withstand high tension during film formation, the porous polyolefin film of the present invention preferably has an average value (hereinafter referred to as "average tensile elongation at break") of tensile elongation at break in the MD direction and tensile elongation at break in the TD direction of 90% or more, more preferably 100% or more, and still more preferably 105% or more. In the case where the average tensile elongation at break is 90% or more, there is no risk of film breakage when high tension is applied. In terms of the upper limit, the average tensile elongation at break is preferably 300% or less.

The tensile elongation at break is preferably 80% or more, and more preferably 95% or more in both the MD direction and the TD direction. In the case where each of the tensile elongation at break in the MD direction and the tensile elongation at break in the TD direction is 80% or more, the film is less likely to be broken and a short circuit can be prevented even when high tension is applied during winding or the like. In terms of the upper limit, the tensile elongation at break is preferably 200% or less in both the MD direction and the TD direction. It is preferable that the tensile elongation at break is 200% or less since the film tends to be less likely to be deformed when stored for a long period of time in a wound state, and is excellent in long-term storage stability.

The tensile elongation at break of the porous polyolefin film of the present invention can be adjusted by the crystallinity and the melting point of the raw material resin, and the kneading conditions, the stretching ratio, and the stretching method for the resin. Details will be described later.

For the porous polyolefin film of the present invention, a value of the average tensile strength at break (MPa) $\times$ the average tensile elongation at break (%) is preferably 15,000 (MPa$\times$%) or more, more preferably 16000 (MPa$\times$%) or more, still more preferably 17,500 (MPa$\times$%) or more, and particularly preferably 20,000 (MPa$\times$%) or more, in order to withstand a tension load applied during coating or battery production. In terms of the upper limit, this value is preferably 750,000 (MPa$\times$%) or less, and more preferably 700,000 (MPa$\times$%) or less.

In the case where the value of the average tensile strength at break $\times$ the average tensile elongation at break is 15,000 (MPa$\times$%) or more, the tension applied during coating and battery production can be sufficiently withstood, and film breakage can be prevented. Further, since the tensile strength at break and the tensile elongation at break are generally in a trade-off relationship, a porous polyolefin having values within the above ranges is advantageous for shape maintenance characteristics. The value of the average tensile strength at break $\times$ the average tensile elongation at break of the porous polyolefin film of the present invention can be adjusted by the crystallinity and the melting point of the raw material resin, and the kneading conditions, the stretching ratio, and the stretching method for the resin. Details will be described later.

The porous polyolefin film of the present invention has a porosity of preferably 40% or more, more preferably 43% or more, and still more preferably 46% or more. It is preferable that the porosity is 40% or more from the viewpoints of ion permeation performance and the content of an electrolyte solution. The upper limit of the porosity is preferably 60% or less from the viewpoint of ensuring strength. The porosity of the porous polyolefin film of the present invention can be adjusted by adjusting the resin concentration, stretching temperature, and heat treatment conditions. Details will be described later.

The porous polyolefin film of the present invention has a maximum flow pore diameter of preferably 10 nm or more, and more preferably 15 nm or more. The upper limit thereof is preferably 50 nm or less, more preferably 45 nm or less, and still more preferably 40 nm or less.

It is preferable that the maximum flow pore diameter is 10 nm or more from the viewpoints of improving ion permeability and cycle characteristics. On the other hand, it is preferable that the maximum flow pore diameter is 50 nm or less from the viewpoint of improving insulation performance. The maximum flow pore diameter of the porous polyolefin film of the present invention can be adjusted by the crystallinity and the melting point of the raw material resin, and the kneading conditions, the stretching ratio, and the stretching method for the resin. Details will be described later.

The porous polyolefin film of the present invention preferably has an average pore diameter of a surface obtained by image analysis of 10 nm or more and 100 nm or less. In terms of the lower limit, the average pore diameter of the surface is more preferably 20 nm or more, and still more preferably 30 nm or more. In addition, in terms of the upper limit, the average pore diameter of the surface is more preferably 90 nm or less, still more preferably 80 nm or less, particularly preferably 70 nm or less, and most preferably 65 nm or less.

Here, the average pore diameter of the surface obtained by image analysis is the average value of pore diameters of the surface observed by a scanning electron microscope (SEM), and, specifically, can be obtained by binarizing a captured SEM image so as to extract only the pores by the following method. A binarization processing is performed by using an image of 11.7 $\mu$m $\times$ 9.4 $\mu$m (1280 pixels $\times$ 1024 pixels) and an 8-bit (256 gradations) gray scale at an acceleration voltage of 2 kV and a magnification of 10,000 times. After removing noise by averaging 3 pixels $\times$ 3 pixels, a dynamic binarization processing is performed with -30 gradations as a threshold value, so as to extract a dark part (pores) from an image averaged by 21 pixels $\times$ 21 pixels. The number of surface pores existing per 1 $\mu$m$^2$ of the independent dark part is calculated, and the average pore diameter is calculated based on each area of the independent dark part according to the following formula.

$$\text{Average pore diameter} = (\text{total area of dark area/the number of surface pores}/3.14)^{0.5} \times 2$$

The porous polyolefin film of the present invention preferably has a maximum melt shrinkage rate in the TD direction of 1% or more and 25% or less, more preferably 1% or more and 23% or less, still more preferably 1% or more and 20% or less, particularly preferably 1% or more and 15% or less, and most preferably 1% or more and 10% or less. In the case where the maximum melt shrinkage rate is within the above range, it is possible to prevent an internal short circuit even when abnormal heat is generated locally in the battery when the film is used as a battery separator, and a separator excellent in safety is obtained. The maximum melt shrinkage rate is a value obtained by the method described in Examples using a thermomechanical analyzer.

In terms of the upper limit, the film thickness of the porous polyolefin film of the present invention is preferably 15 $\mu$m or less, more preferably 13 $\mu$m or less, and still more preferably 10 $\mu$m or less. In terms of the lower limit, the film thickness is 1 $\mu$m or more, and more preferably 3 $\mu$m or more. In the case where the film thickness is 15 $\mu$m or less, the ion permeability is improved, which leads to an increase in the capacity of the battery. It is not preferable that the film thickness is less than 1 $\mu$m since the strength is low, the film is easily broken, and the resistance to needle-like foreign matters such as dendrite is low. Further, in the case where the film thickness is large, the ion permeability deteriorates and a high capacity cannot be obtained. The film thickness of the porous polyolefin film of the present invention can be adjusted by adjusting the width of the unstretched sheet, a film formation speed, and the stretching ratio during stretching.

(1) Ultra-high Molecular Weight Polyethylene Resin

The porous polyolefin film of the present invention preferably contains a polyolefin resin. From the viewpoints of mechanical strength, shape maintenance characteristics, and pore diameter, the polyolefin resin preferably contains an ultra-high molecular weight polyethylene resin having a weight average molecular weight (Mw) of $1.0 \times 10^6$ or more. The specific Mw of the ultra-high molecular weight polyethylene resin to be contained is preferably $1.5 \times 10^6$ or more, and more preferably $1.8 \times 10^6$ or more. In the case where the Mw is $1.5 \times 10^6$ or more, excellent mechanical strength can be obtained. The upper limit thereof is preferably $5.0 \times 10^6$ or less, and more preferably $4.0 \times 10^6$ or less. In the case where the Mw is $5.0 \times 10^6$ or less, it is possible to prevent the melt viscosity during kneading from becoming high and the moldability from being deteriorated.

The content of the ultra-high molecular weight polyethylene resin in the polyolefin resin is preferably 2 mass% or more, more preferably 5 mass% or more, and still more preferably 10 mass% or more. In the case where the content of the ultra-high molecular weight polyethylene resin is 2 mass% or more, it is possible to obtain effects of improving the mechanical strength, reducing the pore diameter, and improving the heat resistance. In addition, the content of the ultra-high molecular weight polyethylene resin in the polyolefin resin is preferably 50 mass% or less, more preferably 40 mass% or less, and still more preferably 30 mass% or less. In the case where the content of the ultra-high molecular weight polyethylene resin is 50 mass% or less, it is possible to prevent deterioration of the moldability during film formation.

In the case where the weight average molecular weight and the content of the ultra-high molecular weight polyethylene resin are within the above ranges, the number and entanglement of tie molecular chains between lamellas can be controlled, the tie molecules can be highly oriented by stretching, and mechanical strength such as puncture strength and tensile strength at break of the porous polyolefin film can be controlled.

The ultra-high molecular weight polyethylene resin preferably has a high melting point, and more specifically, the melting point is preferably 140°C or higher, more preferably 141°C or higher, and most preferably 142°C or higher. In the case where the melting point of the ultra-high molecular weight polyethylene resin is within the above temperature range, the number of components that lower the melting point such as branching is reduced, and the entanglement of the amorphous region in which polyolefin molecules are entangled becomes less complicated, so that stretching makes it easier to disentangle the amorphous region. Floating chain components such as Syrian chains generated by disentanglement are recrystallized by a heat treatment. The heat shrinkage rate can be reduced by disentanglement and recrystallization.

Further, the ultra-high molecular weight polyethylene resin preferably has high crystallinity, and more specifically, a heat of fusion of the ultra-high molecular weight polyethylene resin obtained by DSC (differential scanning calorimetry) based on JIS K7121 (1987) is preferably 175 J/g or more, more preferably 180 J/g or more, and still more preferably 185 J/g or more. When the ultra-high molecular weight polyethylene resin has high crystallinity, the amorphous portion is reduced, so that it is easy to be highly oriented by stretching, which leads to high strength.

Based on the above reasons, when a high melting point and high crystallinity ultra-high molecular weight polyethylene resin is contained in the polyolefin resin, the molecular chains (tie molecules) that connect adjacent crystals can be highly oriented to achieve both an increase in mechanical strength and a decrease in heat shrinkage rate due to disentanglement.

(2) Polyolefin Resin

Examples of a polyolefin resin preferably contained in the porous polyolefin film of the present invention include a polyethylene resin, the above ultra-high molecular weight polyethylene resin, polypropylene, poly(4-methyl-pentene-1), an ethylene-propylene copolymer, polytetrafluoroethylene, polychlorotrifluoroethylene, polyvinylidene fluoride, polyvinylidene chloride, polyvinyl fluoride, polyvinyl chloride, and polysulfone.

The polyolefin resin may be a mixture of two or more kinds of polyolefins.

The polyolefin resin preferably contains a polyethylene resin. The content of the polyethylene resin is preferably 90 mass% or more, more preferably 95 mass% or more, and particularly preferably 99 mass% or more in the polyolefin resin. In the case where the percentage of the polyethylene resin in the polyolefin resin is within the above range, the strength of the obtained porous polyolefin film can be improved.

From the viewpoint of improving the strength, the porous polyolefin film of the present invention preferably contains a polyolefin resin as a main component, and more preferably a polyethylene resin as a main component. Here, the expression "contains a polyethylene resin as a main component" means that the content of the polyethylene resin in the porous polyolefin film of the present invention is 50 mass% or more, more preferably 90 mass% or more, and still more preferably 95 mass% or more.

As the polyethylene resin, (I) an ethylene homopolymer or (II) a copolymer of ethylene with a comonomer such as propylene, butene-1, and hexene-1, and a mixture thereof can be used.

Among these, from the viewpoints of economy and film strength, the polyethylene resin is preferably (I) ethylene homopolymer, and is preferably a high density polyethylene resin having a weight average molecular weight (Mw) of $1 \times 10^4$ or more and less than $1.0 \times 10^6$.

In the present description, the high density polyethylene resin refers to a polyethylene having a density higher than 0.94 $g/cm^3$.

The molecular weight dispersion (Mw/Mn) of the polyethylene resin is preferably, for example, 1 to 20, and more preferably 3 to 10, from the viewpoints of extrusion moldability and physical property control by stable crystallization control.

The content of the comonomer in the copolymer as the polyethylene resin is preferably 10 mol% or less based on 100 mol% of the copolymer. Such a copolymer can be produced by any convenient polymerization process, such as a process using a Ziegler-Natta catalyst or a single site catalyst. The comonomer may be an $\alpha$-olefin. For example, if desired, the comonomer is one or more of propylene, butene-1, pentene-1, hexene-1, 4-methylpentene-1, octene-1, vinyl acetate, methyl methacrylate, styrene, or other monomers.

The polyethylene resin may be a polyethylene resin alone or a mixture of two or more kinds of polyethylene resins.

The polyethylene resin is preferably a mixture of the high density polyethylene resin and the ultra-high molecular weight polyethylene resin from the viewpoints of economy and film strength.

(3) Other Resin Components

The polyolefin resin may contain other resin components other than the above polyethylene resin, if necessary. The other resin components are preferably heat resistant resins. Examples of the heat resistant resins include a crystalline resin (including a partially crystalline resin) having a melting point of 150°C or higher and/or an amorphous resin having a glass transition temperature (Tg) of 150°C or higher. Here, Tg is a value measured in accordance with JIS K7121.

Specific examples of the other resin components include polyester, polymethylpentene [PMP or TPX (transparent polymer X), melting point: 230°C to 245°C], polyamide (PA, melting point: 215°C to 265°C), polyarylene sulfide (PAS), fluororesins such as vinylidene fluoride homopolymers such as polyvinylidene fluoride (PVDF) or fluorinated olefins such as polytetrafluoroethylene (PTFE) and copolymers thereof, polystyrene (PS, melting point: 230°C), polyvinyl alcohol (PVA, melting point: 220°C to 240°C), polyimide (PI, Tg: 280°C or higher), polyamide-imide (PAI, Tg: 280°C), polyether sulfone (PES, Tg: 223°C), polyetheretherketone (PEEK, melting point: 334°C), polycarbonate (PC, melting point: 220°C to 240°C), cellulose acetate (melting point: 220°C), cellulose triacetate (melting point: 300°C), polysulfone (Tg: 190°C), and polyetherimide (melting point: 216°C). The other resin components are not limited to those composed of a resin component alone, and may be composed of a plurality of resin components.

The preferred weight average molecular weight (Mw) of the other resin components varies depending on the kind of the resin, and is typically $1 \times 10^4$ to $1 \times 10^6$, and more preferably $1 \times 10^4$ to $7 \times 10^5$. The content of the other resin components in the polyolefin resin is appropriately adjusted without departing from the spirit of the present invention, and the other resin components are contained in the polyolefin resin in a range of about 10 mass% or less.

Further, as the other resin components, if necessary, a polyolefin other than the polyethylene resin may be contained. At least one selected from the group consisting of polybutene-1, polybutene-1, polypentene-1, polyhexene-1, and polyoctene-1 having Mw of $1.0 \times 10^4$ to $4.0 \times 10^6$, and polyethylene wax having Mw of $1.0 \times 10^3$ to $1.0 \times 10^4$ may be used.

The content of the polyolefin resin other than the polyethylene resin can be appropriately adjusted within a range that does not impair the effects of the present invention, and is preferably 10 mass% or less, more preferably 5 mass% or less, and still more preferably 1 mass% in the polyolefin resin.

(4) Additive

If necessary, various additives such as antioxidants, ultraviolet absorbers, pigments, and dyes can be added to the polyolefin resin as described above within a range that does not impair the object of the present invention.

In the case where the additive is blended with the polyolefin resin, the blending amount thereof is preferably 0.01 part by mass to 10 parts by mass with respect to 100 parts by mass of the polyolefin resin. If the blending amount of the additive is less than 0.01 part by mass, a sufficient effect may not be obtained or it may be difficult to control the additive amount during the production. If the blending amount of the additive is more than 10 parts by mass, the economy may be inferior.

2. Method for Producing Porous Polyolefin Film

The method for producing the porous polyolefin film of the present invention preferably includes the following steps (1) to (5), can further include the following step (6), and can further include the following steps (7) and/or (8).

(1) a step of preparing a polyolefin resin composition by melt-kneading the above polyolefin resin and a film-forming solvent
(2) a step of forming a gel-like sheet by extruding the polyolefin resin composition and performing cooling
(3) a first stretching step of stretching the gel-like sheet
(4) a step of removing the film-forming solvent from the stretched gel-like sheet
(5) a step of drying the sheet after removing the film-forming solvent
(6) a second stretching step of stretching the dried sheet
(7) a step of heat-treating the dried sheet
(8) a step of crosslinking and/or hydrophilizing the sheet after the second stretching step

Hereinafter, each step will be described.

(1) Step of Preparing Polyolefin Resin Composition

The polyolefin resin is melt-kneaded to prepare a polyolefin resin composition. As a preparation method, it is important to enhance the dispersibility of a high crystallinity ultra-high molecular weight polyolefin resin. For example, raw materials can be kneaded using a batch type kneader capable of high shear kneading.
The lower limit of the temperature during the kneading is preferably 170°C or higher, more preferably 175°C or higher, and still more preferably 180°C or higher. In the case where the temperature during the kneading is 170°C or higher, the viscosity of the molten resin can be lowered, and the ultra-high molecular weight polyolefin resin, which is difficult to knead uniformly, can be uniformly dispersed. In terms of the upper limit, the temperature during the kneading is preferably 250°C or lower, more preferably 220°C or lower, still more preferably 200°C or lower, and particularly preferably 185°C or lower. In the case where the temperature during the kneading is 250°C or lower, it is possible to prevent the strength of the porous polyolefin film obtained by decomposing the resin from being lowered.
In terms of the lower limit, the rotation speed during the kneading is preferably 100 rpm or more, more preferably 120 rpm or more, still more preferably 130 rpm or more, and particularly preferably 150 rpm or more. In the case where the rotation speed during the kneading is 100 rpm or more, sufficient shear can be applied to the resin, and the ultra-high molecular weight polyolefin resin can be uniformly dispersed. Therefore, it is possible to prevent the generation of the unmelted resin of the raw material resin in the obtained porous polyolefin film, that is, to prevent the puncture strength and the tensile strength at break from being lowered. The upper limit of the rotation speed during the kneading is preferably 250 rpm or less, more preferably 230 rpm or less, and still more preferably 200 rpm or less. When the rotation speed during the kneading is 250 rpm or less, it is possible to prevent the strength of the porous polyolefin film obtained by breaking the molecular chain of the raw material during the kneading from being lowered.
In terms of the lower limit, the kneading time is preferably 5 minutes or longer, more preferably 10 minutes or longer, and still more preferably 15 minutes or longer. In the case where the kneading time is 5 minutes or longer, the ultra-high molecular weight polyolefin resin can be uniformly dispersed. In terms of the upper limit, the kneading time is preferably 25 minutes or shorter, and more preferably 20 minutes or shorter. In the case where the kneading time is 25 minutes or shorter, it is possible to prevent the strength of the porous polyolefin film obtained by decomposing and deteriorating raw materials during the kneading.
Further, it is preferable to separately add the raw materials divided to two or more portions rather than adding the raw materials all at once. By kneading the ultra-high molecular weight polyolefin resin and the film-forming solvent in advance, and then adding other components, the ultra-high molecular weight polyolefin resin is uniformly dispersed, which leads to low shrinkage, high strength, high porosity, and small diameter of the obtained porous polyolefin film.
The film-forming solvent is not particularly limited as long as it can sufficiently dissolve the polyolefin resin, but the film-forming solvent is preferably liquid at room temperature in order to enable stretching at a relatively high ratio. Examples of the film-forming solvent include aliphatic hydrocarbons, cyclic aliphatic hydrocarbons or aromatic hydrocarbons such as nonane, decane, decalin, paraxylene, undecane, dodecane, and liquid paraffin, mineral oil fractions whose boiling point correspond to those of these compounds, and phthalic esters that are liquid at room temperature, such as dibutyl phthalate and dioctyl phthalate.

In order to obtain a gel-like sheet having a stable liquid solvent content, it is preferable to use a non-volatile liquid solvent such as liquid paraffin as the film-forming solvent. The liquid solvent is mixed with a solvent that can be mixed with the polyolefin resin under a melt-kneading state and that is solid at room temperature. Examples of such a solid solvent include stearyl alcohols, ceryl alcohols, and paraffin wax. However, when only the solid solvent is used, uneven stretching and so on may occur.

The viscosity of the liquid solvent is preferably 20 cSt to 200 cSt at 40°C. When the viscosity at 40°C is 20 cSt or more, the sheet obtained by extruding a polyolefin resin solution from a die is less likely to become non-uniform. On the other hand, when the viscosity at 40°C is 200 cSt or less, the liquid solvent can be easily removed. The viscosity of the liquid solvent is the viscosity measured at 40°C using an Ubbelohde viscometer.

The blending ratio of the polyolefin resin and the film-forming solvent in the polyolefin resin composition is not particularly limited. However, the film-forming solvent is preferably 50 to 80 parts by mass with respect to 20 to 50 parts by mass of the polyolefin resin. More preferably, the film-forming solvent is 60 to 75 parts by mass with respect to 25 to 40 parts by mass of the polyolefin resin.

(2) Step of Forming Gel-like Sheet

The polyolefin resin composition is fed from an extruder to the die and extruded into a sheet. A plurality of polyolefin resin compositions having the same or different compositions may be fed from the extruder to one die, laminated in layers there, and extruded into a sheet.

The extrusion method may be either a flat die method or an inflation method. The extrusion temperature is preferably 140°C to 250°C, and the extrusion speed is preferably 0.2 m/min to 15 m/min. The film thickness can be adjusted by adjusting each extrusion amount of the polyolefin resin composition.

As the extrusion method, for example, the methods disclosed in Japanese Patent No. 2132327 specification and Japanese Patent No. 3347835 specification can be used.

The gel-like sheet is formed by cooling the obtained extruded molded product. As the method of forming the gel-like sheet, for example, the methods disclosed in Japanese Patent No. 2132327 specification and Japanese Patent No. 3347835 specification can be used. The cooling is preferably performed at a rate of 50°C/min or more, more preferably 100°C/min or more, and still more preferably 150°C/min or more, up to at least the gelation temperature. The gel-like sheet is preferably cooled to 50°C or lower, more preferably 40°C or lower, still more preferably 30°C or lower, and particularly preferably 20°C or lower.

(3) First Stretching Step

Next, the obtained gel-like sheet is stretched at least in the uniaxial direction. After heating, the gel-like sheet is preferably stretched at a predetermined ratio by a tenter method, a roll method, an inflation method, or a combination thereof. The stretching may be uniaxial stretching or biaxial stretching, and biaxial stretching is preferred. In the case of biaxial stretching, any of simultaneous biaxial stretching, sequential stretching and multistage stretching (for example, a combination of simultaneous biaxial stretching and sequential stretching) may be used.

In the case of uniaxial stretching, the stretching ratio (area stretching ratio) in this step is preferably 5 times or more, and more preferably 10 to 100 times. In the case of biaxial stretching, the stretching ratio is preferably 25 times or more, more preferably 30 times or more, still more preferably 45 times or more, and particularly preferably 75 times or more.

Further, the stretching ratio is preferably 5 times or more, and more preferably 6 times or more in both the machine direction and the transverse direction (the MD direction and the TD direction). The stretching ratios in the MD direction and the TD direction may be the same as or different from each other.

It is preferable that the stretching ratio is 25 times or more since the mechanical strength can be enhanced. It is not preferable that the stretching ratio is 150 times or more since the possibility of film breakage increases. The stretching ratio in this step refers to the area stretching ratio of the porous polyolefin film immediately before being subjected to the next step, based on the porous polyolefin film immediately before this step.

The stretching temperature in this step is preferably in the range of the crystal dispersion temperature ($T_{CD}$) of the polyolefin resin to $T_{CD}$ + 30°C, more preferably in the range of crystal dispersion temperature ($T_{CD}$) + 5°C to crystal dispersion temperature ($T_{CD}$) + 28°C, and particularly preferably in the range of $T_{CD}$ + 10°C to $T_{CD}$ + 26°C. In the case where the stretching temperature is within the above range, film breakage due to stretching of the polyolefin resin can be prevented, and stretching at a high ratio is possible.

The crystal dispersion temperature ($T_{CD}$) is determined by measuring the temperature characteristics of the dynamic viscoelasticity in accordance with ASTM D4065. Since the ultra-high molecular weight polyethylene resin, and the polyethylene resin and the polyethylene resin composition other than the ultra-high molecular weight polyethylene resin have a crystal dispersion temperature of about 100°C to 110°C, the stretching temperature is preferably 90°C to 130°C, more preferably 110°C to 120°C, and still more preferably 114°C to 117°C.

Due to the above stretching, cleavage occurs between the polyethylene lamellae, the polyethylene resin phase becomes finer, and a large number of fibrils are formed. Fibrils form a three-dimensionally irregularly connected network structure.

(4) Step of Removing Film-forming Solvent

The film-forming solvent is removed (cleaned) using a cleaning solvent. Since the polyolefin phase is separated from the film-forming solvent phase, in the case of removing the film-forming solvent, a porous film including fibrils forming a fine three-dimensional network structure and having pores (voids) that communicate with each other irregularly and dimensionally is obtained. Since the cleaning solvent and the method for removing the film-forming solvent using the cleaning solvent are known, the description thereof will be omitted. For example, the method disclosed in Japanese Patent No. 2132327 specification and JP 2002-256099 A can be used.

(5) Drying Step

The porous polyolefin film from which the film-forming solvent has been removed is dried by a heat drying method or an air drying method. The drying temperature is preferably lower than or equal to the crystal dispersion temperature ($T_{CD}$) of the polyolefin resin, and particularly preferably 5°C or more lower than the $T_{CD}$. The drying is preferably performed until the residual cleaning solvent is 5 parts by mass or less, and more preferably 3 parts by mass or less with respect to 100 parts by mass (dry weight) of the porous polyolefin film.

(6) Second Stretching Step

It is preferable to stretch the dried porous polyolefin film at least in the uniaxial direction. The porous polyolefin film can be stretched by a tenter method or the like in the same manner as described above while heating. The stretching may be uniaxial stretching or biaxial stretching. In the case of biaxial stretching, either simultaneous biaxial stretching or sequential stretching may be used.

The stretching temperature in this step is not particularly limited, and is typically 90°C to 135°C, and preferably 95°C to 130°C.

In terms of the lower limit, the stretching ratio (area stretching ratio) of the porous polyolefin film in the uniaxial direction in this step is preferably 1.0 time or more, more preferably 1.1 times or more, still more preferably 1.2 times or more. Further, it is preferable that the upper limit of the stretching ratio in the uniaxial direction is 5.0 times or less. In the case of uniaxial stretching, the stretching ratio is 1.0 to 5.0 times in the MD direction or the TD direction.

In the case of biaxial stretching, the lower limit of the area stretching ratio is preferably 1.0 time or more, more preferably 1.1 times or more, and still more preferably 1.2 times or more. In the case of biaxial stretching, the upper limit of the area stretching ratio is preferably 16.0 times or less. The stretching ratio is 1.0 to 4.0 times in each of the MD direction and the TD direction, and the stretching ratios in the MD direction and the TD direction may be the same as or different from each other. The stretching ratio in this step refers to the stretching ratio of the porous polyolefin film immediately before being subjected to the next step, based on the porous polyolefin film immediately before this step.

(7) Heat Treatment Step

Further, the dried porous polyolefin film can be subjected to a heat treatment. The heat treatment stabilizes the crystals and homogenizes the lamella. As the heat treatment method, a heat fixing treatment and/or a heat relaxation treatment can be used. The heat fixing treatment is a heat treatment in which the film is heated while being held such that the dimensions of the film do not change. The heat relaxation treatment is a heat treatment in which the film is heat-shrunk in the MD direction or the TD direction during heating. The heat fixing treatment is preferably performed by a tenter method or a roll method. As the heat relaxation treatment method, for example, the method disclosed in JP 2002-256099 A can be mentioned. The heat treatment temperature is preferably in the range of the $T_{CD}$ to the melting point of the polyolefin resin.

(8) Crosslinking Treatment Step and Hydrophilizing Treatment Step

Further, the porous polyolefin film after bonding or stretching can be further subjected to a crosslinking treatment and/or a hydrophilizing treatment.

For example, a crosslinking treatment is performed by irradiating the porous polyolefin film with ionizing radiation such as A ray, B ray, Γ ray, and electron beams. In the case of electron beam irradiation, an electron dose of 0.1 MRAD to 100 MRAD is preferred, and an acceleration voltage of 100 kV to 300 kV is preferred. The crosslinking treatment raises the meltdown temperature of the porous polyolefin film.

Further, the hydrophilizing treatment can be performed by a monomer graft, a surfactant treatment, a corona discharge or the like. The monomer graft is preferably performed after the crosslinking treatment.

3. Laminated Porous Polyolefin Film

A porous layer may be provided on at least one surface of the porous polyolefin film to form a laminated porous polyolefin film. Examples of the porous layer include a porous layer formed by using a filler-containing resin solution containing a filler and a resin binder or a heat resistant resin solution.

4. Battery Separator

The porous polyolefin film of the present invention can be suitably used for both a battery using an aqueous electrolyte solution and a battery using a non-aqueous electrolyte. Specifically, the porous polyolefin film of the present invention can be preferably used as a separator for secondary batteries such as a nickel-hydrogen battery, a nickel-cadmium battery, a nickel-zinc battery, a silver-zinc battery, a lithium secondary battery, and a lithium polymer secondary battery. Among these, it is preferable to use the porous polyolefin film of the present invention as a separator for a lithium ion secondary battery.

In the lithium ion secondary battery, a positive electrode and a negative electrode are laminated via a separator, and the separator contains an electrolyte solution (electrolyte). The structure of the electrode is not particularly limited, and a common structure can be used. For example, an electrode structure (coin type) in which disc-shaped positive electrode and negative electrode are arranged to face each other, an electrode structure (laminated type) in which flat plate-shaped positive electrode and negative electrode are alternately laminated, and an electrode structure (winding type) in which laminated band-shaped positive electrode and negative electrode are wound can be used.

The current collector, the positive electrode, the positive electrode active material, the negative electrode, the negative electrode active material, and the electrolyte solution to be used in the lithium ion secondary battery are not particularly limited, and common materials can be appropriately combined and used.

The present invention is not limited to the above embodiment, and can be variously modified and implemented within the scope of the gist thereof.

Examples

The present invention will be described in more detail by way of Examples, but the embodiments of the present invention are not limited to these Examples.

The evaluation methods, analytical methods and materials used in Examples are as follows.

(1) Film Thickness (μm)

The film thickness was measured at five randomly selected points within the range of 95 mm × 95 mm of a porous polyolefin film with a contact thickness meter (Litematic manufactured by Mitutoyo Corporation), and the average value of the film thickness at five points was calculated.

(2) Porosity (%)

A 5-cm-square sample was cut from the porous polyolefin film, the volume ($cm^3$) and weight (g) thereof were determined, and the porosity was calculated from the volume and weight and the polymer density ($g/cm^3$) using the following equation. The above measurement was performed at three different randomly selected points in the same film, and the average value of the porosity at the three points was calculated.

$$\text{Porosity} = [(\text{volume} - \text{weight/polymer density})/\text{volume}] \times 100$$

(3) Maximum Flow Pore Diameter and Mean Flow Pore Diameter (nm)

Using a perm-porometer (CFP-1500A, manufactured by PMI), the maximum flow pore diameter and the mean flow pore diameter were measured in the order of Dry-up and Wet-up. In the Wet-up, a pressure was applied to a porous polyolefin film sufficiently immersed in Galwick (trade name) manufactured by PMI having a surface tension of 15.6 dynes/cm, and the pore diameter converted from the pressure at which air began to penetrate was defined as the maximum flow pore diameter.

Regarding the mean flow pore diameter, the mean flow pore diameter was converted from the pressure at the intersection of a curve showing the slope of 1/2 of a curve of pressure and flow rate in Dry-up measurement and a curve in Wet-up measurement. The following equation was used to convert the pressure and the mean flow pore diameter.

$$d = C \cdot \gamma / P$$

In the above equation, "d ($\mu$m)" represents the mean flow pore diameter of the porous polyolefin film, "$\gamma$ (mN/m)" represents the surface tension of the liquid, "P (Pa)" represents the pressure, and "C" is a constant.

(4) Puncture Strength (N) in Terms of Porosity of 50% and Film Thickness of 20 $\mu$m

The maximum load when a porous polyolefin film having a film thickness of T1 ($\mu$m) and a porosity of PI (%) was pierced at a speed of 2 mm/sec with a needle having a spherical (radius of curvature R: 0.5 mm) tip having a diameter of 1 mm was measured using a puncture meter manufactured by MARUBISHI Co., Ltd. The measured value L1 (N) of the maximum load was converted into the maximum load L2 when the film thickness was 20 $\mu$m and the porosity was 50% according to the equation: L2 = (L1 $\times$ 20)/T1 $\times$ 50/(100 - PI), and puncture strength in terms of a porosity of 50% and a film thickness of 20 $\mu$m was obtained. The above measurement was performed at three different points in the same porous polyolefin film, and the average value of the puncture strength in terms of a porosity of 50% and a film thickness of 20 $\mu$m was obtained.

(5) Weight Average Molecular Weight (Mw)

The weight average molecular weights of the ultra-high molecular weight polyethylene resin and the high density polyethylene resin were determined by the gel permeation chromatography (GPC) method under the following conditions.
- Measurement device: GPC-150C manufactured by WATERS CORPORATION
- Column: SHODEX UT806M manufactured by Showa Denko K. K.
- Column temperature: 135°C
- Solvent (mobile phase): O-dichlorobenzene
- Solvent flow rate: 1.0 mL/min
- Sample concentration: 0.1 wt% (dissolution condition: 135°C/1 H)
- Injection amount: 500 $\mu$L
- Detector: differential refractometer (RI detector) manufactured by WATERS

CORPORATION

- Calibration curve: prepared from a calibration curve obtained using a monodisperse polystyrene standard sample using a predetermined conversion constant.

(6) Maximum Melt Shrinkage Rate (%)

The maximum melt shrinkage rate was measured by the following method using a thermomechanical analyzer (TMA/SS 6100 manufactured by Seiko Instruments). That is, the temperature was raised and scanned under the conditions of sample shape: width 3 mm $\times$ length 10 mm, initial load: 19.6 mN, temperature scanning range: 30°C to 210°C, and temperature rising rate: 5°C/min. Any different regions were randomly extracted from the same porous polyolefin film. The amount of shrinkage in the TD direction was measured at three points in each of the plurality of regions, and the shrinkage rate at the point where the dimensions were most shrunk was defined as the maximum melt shrinkage rate. The average value of the maximum melt shrinkage rates obtained in respective regions was defined as the "maximum melt shrinkage rate in the TD direction". Further, the "maximum melt shrinkage rate in the MD direction" was measured by the same method.

(7) Tensile Strength at Break (MPa)

A tensile test was performed using a tensile tester (Shimadzu Autograph AGS-J type), and the strength at break of the sample was divided by the cross-sectional area of the sample before the test to obtain the tensile strength at break (MPa). The measurement conditions include temperature: $23 \pm 2°C$, sample shape: width 10 mm $\times$ length 50 mm, distance between chucks: 20 mm, and tensile rate: 100 mm/min. The above measurement was performed at three different points in the same film in the MD direction and the TD direction respectively, the average value of the three points was taken as the tensile strength at break in each direction (MD tensile strength at break and TD tensile strength at break), and the average value of all six points was taken as the average tensile strength at break.

(8) Tensile Elongation at Break (%)

A tensile test was performed using a tensile tester (Shimadzu Autograph AGS-J type), and the tensile elongation at break was calculated from the distance L0 (mm) between gauge points of the test piece before the test and the gauge point distance L (mm) at break according to the following equation. The measurement conditions include temperature: $23 \pm 2°C$, sample shape: width 10 mm $\times$ length 50 mm, distance between chucks: 20 mm, and tensile rate: 100 mm/min. The above measurement was performed at three different points in the same film in the MD direction and the TD direction respectively, the average value of the three points was taken as the tensile elongation at break in each direction (MD tensile elongation at break and TD tensile elongation at break), and the average value of all six points was taken as the average tensile elongation at break.

$$\text{Tensile elongation at break (\%)} = ((L - L0)/L) \times 100$$

(9) tan $\delta$

The viscoelasticity was measured using a dynamic viscoelasticity measuring machine (RSA-G2 manufactured by TA Instruments), and the tan $\delta$ was determined by the loss elastic modulus/storage elastic modulus. The measurement conditions include sample shape: width 10 mm $\times$ length 50 mm, initial distance between chucks: 20 mm, initial strain: 0.1%, frequency: 1 Hz, temperature scanning range: 30°C to 180°C, temperature rising rate: 5°C/min, initial tension: 50 gf, minimum strain as automatic strain adjustment program: 0.1%, maximum strain: 1.5%, minimum tension: 1.0 g, and maximum tension: 300.0 g. The above measurement was performed at three different points in the same film in the MD direction and the TD direction respectively. The peak top value of the tan $\delta$ as the average value was defined as the tan $\delta$ peak value, and the temperature at the peak top was defined as the tan $\delta$ peak temperature.

(10) Degree of Crystallinity and Melting Point

The sample was allowed to stand in a sample holder of a scanning differential calorimeter (DSC-System7 type, manufactured by Perkin Elmer, Inc.), held at 30°C for 1 minute in a nitrogen atmosphere, and heated to 230°C at a rate of 10°C/min. A straight line passing through a point at 60°C and a point at 180°C on a DSC curve (melting curve) obtained in the heating process was drawn as a baseline, the amount of heat (unit: J) was calculated from the area surrounded by the baseline and the DSC curve, and the amount of heat was divided by the weight (unit: g) of the sample, to obtain the heat of fusion $\Delta Hm$ (unit: J/g).
Similarly, the heat of fusion $\Delta H$ and the temperature of the minimum value in an endothermic melting curve were measured as the melting points.

(11) Appearance

The appearance of the porous polyolefin film was visually evaluated. Those with a small variation in thickness or color by visual inspection were evaluated as "good", and those with a large variation in thickness or color by visual inspection were evaluated as "poor".

(12) Air Permeation Resistance (sec/100 cm$^3$/20 $\mu$m)

An air permeation resistance PI (sec/100 cm$^3$) measured on a porous polyolefin film having a film thickness of T1 ($\mu$m) with an air permeation resistance meter (EGO-IT, manufactured by ASAHI SEIKO CO., LTD.) in accordance with JIS P-8117 was converted into an air permeation resistance P2 when the film thickness was 20 $\mu$m according to the equation: P2 = (P1 $\times$ 20)/T1.

(13) Calculation of the number of Surface Pores and Surface Pore Diameter

A vapor-deposited porous polyolefin film was observed with a scanning electron microscope (SEM) at an acceleration voltage of 2 kV By binarizing the captured SEM image, pores were extracted, and the number of surface pores per unit area, the surface opening ratio, and the surface pore diameter were calculated. The binarization processing was performed by using an image of 11.7 $\mu$m × 9.4 $\mu$m (1280 pixels × 1024 pixels) and an 8-bit (256 gradations) gray scale at an acceleration voltage of 2 kV and a magnification of 10,000 times. As an image processing method, after removing noise on the above SEM image by averaging 3 pixels × 3 pixels, a dynamic binarization processing was performed with -30 gradations as a threshold value, so as to extract a dark part from an image averaged by 21 pixels × 21 pixels. Thus, the binarization processing was performed. The number of surface pores existing per 1 $\mu$m$^2$ of the independent dark part was calculated. Further, the average pore diameter was calculated based on each area of the independent pore according to the following equation.

$$\text{Average pore diameter} = (\text{total area of dark area/the number of surface pores}/3.14)^{0.5} \times 2$$

[Example 1]

A composition containing 7.5 parts by mass of an ultra-high molecular weight polyethylene resin having a weight average molecular weight (Mw) of 20 × 10$^5$, a melting point of 140.5°C, and a heat of fusion of 188 J/g and 75 parts by mass of a liquid paraffin was blended to obtain a mixture. The obtained mixture was charged into a high-shear type "Laboplast Mill" manufactured by Toyo Seiki Seisaku-sho, Ltd., and melt-kneaded at a temperature of 180°C for 1 minute while maintaining the screw rotation speed at 150 rpm, 17.5 parts by mass of a high density polyethylene resin having Mw of 2.8 × 10$^5$ was added to "Laboplast Mill" and the mixture was melt-kneaded for 9 minutes under the above conditions, so as to prepare a polyethylene resin composition.

The obtained polyethylene resin composition was molded by a press machine at 180°C for 5 minutes at 10 MPa so as to form a sheet-shaped molded product. The obtained molded product was cooled at 1 MPa with a press machine whose temperature was adjusted to 15°C to form a gel-like sheet. The obtained gel-like sheet was cut to be 80 mm in both the MD direction and the TD direction, and simultaneous biaxial stretching was performed at a stretching rate (1000 mm/min) at a ratio of 7 times in the MD direction and 7 times in the TD direction under a stretching temperature of 115°C. The stretched film was cleaned in a cleaning tank of methylene chloride whose temperature was adjusted to 20°C, and liquid paraffin was removed. The cleaned film was dried in a drying oven adjusted to 20°C and was subjected to a heat fixing treatment in an electric oven at 125°C for 10 minutes to obtain a porous polyolefin film. Table 1 shows the resin composition and film forming conditions, and Table 3 shows the characteristics of the obtained film.

[Example 2]

A composition containing 4.5 parts by mass of an ultra-high molecular weight polyethylene resin having a weight average molecular weight (Mw) of 20 × 10$^5$, a melting point of 140.4°C, and a heat of fusion of 175 J/g and 75 parts by mass of a liquid paraffin was blended to obtain a mixture. The obtained mixture was charged into a high-shear type "Laboplast Mill" and melt-kneaded at a temperature of 180°C for 1 minute while maintaining the screw rotation speed at 150 rpm, 20.5 parts by mass of a high density polyethylene resin having Mw of 2.8 × 10$^5$ was added to "Laboplast Mill" and the mixture was melt-kneaded for 9 minutes under the above conditions, so as to prepare a polyethylene resin composition. A porous polyolefin film was obtained by the same method as in Example 1 except for the above. Table 1 shows the resin composition and film forming conditions, and Table 3 shows the characteristics of the obtained film.

[Example 3]

A composition containing 7.5 parts by mass of an ultra-high molecular weight polyethylene resin having a weight average molecular weight (Mw) of 25 × 10$^5$, a melting point of 141.7°C, and a heat of fusion of 186 J/g and 75 parts by mass of a liquid paraffin was blended to obtain a mixture. The obtained mixture was charged into a high-shear type "Laboplast Mill" and melt-kneaded at a temperature of 190°C for 1 minute while maintaining the screw rotation speed at 150 rpm, 17.5 parts by mass of a high density polyethylene resin having Mw of 2.8 × 10$^5$ was added to "Laboplast Mill" and the mixture was melt-kneaded for 9 minutes under the above conditions, so as to prepare a polyethylene resin composition. A porous polyolefin film was obtained by the same method as in Example 1 except for the above. Table 1 shows the resin composition and film forming conditions, and Table 3 shows the characteristics of the obtained film.

[Example 4]

A composition containing 6.0 parts by mass of an ultra-high molecular weight polyethylene resin having a weight average molecular weight (Mw) of $33 \times 10^5$, a melting point of 143.7°C, and a heat of fusion of 205 J/g and 80 parts by mass of a liquid paraffin was blended to obtain a mixture. The obtained mixture was charged into a high-shear type "Laboplast Mill" and melt-kneaded at a temperature of 180°C for 1 minute while maintaining the screw rotation speed at 150 rpm, 14.0 parts by mass of a high density polyethylene resin having Mw of $2.8 \times 10^5$ was added to "Laboplast Mill" and the mixture was melt-kneaded for 9 minutes under the above conditions, so as to prepare a polyethylene resin composition.

The obtained polyethylene resin composition was molded by a press machine at 180°C for 5 minutes at 10 MPa so as to form a sheet-shaped molded product. The obtained molded product was cooled at 1 MPa with a press machine whose temperature was adjusted to 15°C to form a gel-like sheet. The obtained gel-like sheet was cut to be 80 mm in both the MD direction and the TD direction, and simultaneous biaxial stretching was performed at a stretching rate (1000 mm/min) at a ratio of 6 times in the MD direction and 6 times in the TD direction under a stretching temperature of 115°C. The stretched film was cleaned in a cleaning tank of methylene chloride whose temperature was adjusted to 20°C, and liquid paraffin was removed. The cleaned film was dried in a drying oven adjusted to 20°C and was subjected to a heat fixing treatment in an electric oven at 125°C for 10 minutes to obtain a porous polyolefin film. Table 1 shows the resin composition and film forming conditions, and Table 3 shows the characteristics of the obtained film.

[Example 5]

A mixture was obtained by blending 6.0 parts by mass of an ultra-high molecular weight polyethylene resin having a weight average molecular weight (Mw) of $33 \times 10^5$, a melting point of 143.7°C, and a heat of fusion of 205 J/g, 14.0 parts by mass of a high density polyethylene resin having Mw of $2.8 \times 10^5$, and 80 parts by mass of a liquid paraffin. The obtained mixture was charged into a high-shear type "Laboplast Mill" and melt-kneaded at a temperature of 180°C for 20 minutes while maintaining the screw rotation speed at 150 rpm, so as to prepare a polyethylene resin composition. A porous polyolefin film was obtained by the same method as in Example 4 except for the above. Table 1 shows the resin composition and film forming conditions, and Table 3 shows the characteristics of the obtained film.

[Comparative Example 1]

A composition containing 7.5 parts by mass of an ultra-high molecular weight polyethylene resin having a weight average molecular weight (Mw) of $25 \times 10^5$, a melting point of 138.0°C, and a heat of fusion of 178 J/g and 75 parts by mass of a liquid paraffin was blended to obtain a mixture. The obtained mixture was charged into a high-shear type "Laboplast Mill" and melt-kneaded at a temperature of 180°C for 1 minute while maintaining the screw rotation speed at 150 rpm, 17.5 parts by mass of a high density polyethylene resin having Mw of $2.8 \times 10^5$ was added to "Laboplast Mill" and the mixture was melt-kneaded for 9 minutes under the above conditions, so as to prepare a polyethylene resin composition. A porous polyolefin film was obtained by the same method as in Example 1 except for the above. Table 2 shows the resin composition and film forming conditions, and Table 4 shows the characteristics of the obtained film.

[Comparative Example 2]

The gel-like sheet obtained in Example 1 was subjected to simultaneous biaxial stretching at a stretching rate of 1000 mm/min at a ratio of 5 times in the MD direction and 5 times in the TD direction under a stretching temperature of 115°C. A porous polyolefin film was obtained by the same method as in Example 1 except for the above. Table 2 shows the resin composition and film forming conditions, and Table 4 shows the characteristics of the obtained film.

[Comparative Example 3]

A mixture was obtained by blending 6.0 parts by mass of an ultra-high molecular weight polyethylene resin having a weight average molecular weight (Mw) of $33 \times 10^5$, a melting point of 143.7°C, and a heat of fusion of 205 J/g, 14.0 parts by mass of a high density polyethylene resin having Mw of $2.8 \times 10^5$, and 80 parts by mass of a liquid paraffin. The obtained mixture was charged into a high-shear type "Laboplast Mill" and melt-kneaded at a temperature of 190°C for 10 minutes while maintaining the screw rotation speed at 50 rpm, so as to prepare a polyethylene resin composition. A porous polyolefin film was obtained by the same method as in Example 4 except for the above. Table 2 shows the resin composition and film forming conditions, and Table 4 shows the characteristics of the obtained film.

[Comparative Example 4]

A mixture was obtained by blending 6.0 parts by mass of an ultra-high molecular weight polyethylene resin having a weight average molecular weight (Mw) of $25 \times 10^5$, a melting point of 138.0°C, and a heat of fusion of 178 J/g, 14.0 parts by mass of a high density polyethylene resin having Mw of $2.8 \times 10^5$, and 80 parts by mass of a liquid paraffin. A porous polyolefin film was obtained by the same method as in Example 5 except for the above. Table 2 shows the resin composition and film forming conditions, and Table 4 shows the characteristics of the obtained film.

[Table 1]

| Example No | | Example 1 | Example 2 | Example 3 | Example 4 | Example 5 |
|---|---|---|---|---|---|---|
| Resin composition | | | | | | |
| Content of high density PE | Part by mass | 70 | 82 | 70 | 70 | 70 |
| Mw of high density PE | $\times 10^5$ | 2.8 | 2.8 | 2.8 | 2.8 | 2.8 |
| Content of ultra-high molecular weight PE | Part by mass | 30 | 18 | 30 | 30 | 30 |
| Mw of ultra-high molecular weight PE | $\times 10^5$ | 20 | 20 | 25 | 33 | 33 |
| Melting point of ultra-high molecular weight PE | °C | 140.5 | 140.4 | 141.7 | 143.7 | 143.7 |
| Heat of fusion of ultra-high molecular weight PE | J/g | 188 | 175 | 186 | 205 | 205 |
| Blending ratio (mass ratio) of polyolefin resin/ film-forming solvent | - | 25/75 | 25/75 | 25/75 | 20/80 | 20/80 |
| Production condition | | | | | | |
| Kneading method | | Dividing addition | Dividing addition | Dividing addition | Dividing addition | Bulk addition |
| Rotation speed during kneading | rpm | 150 | 150 | 150 | 150 | 150 |
| Kneading temperature | °C | 180 | 180 | 180 | 180 | 180 |
| Kneading time | min | 10 | 10 | 10 | 10 | 20 |
| Stretching method | | Simultaneous Biaxial | Simultaneous Biaxial | Simultaneous Biaxial | Simultaneous Biaxial | Simultaneous Biaxial |
| Stretching ratio | MD $\times$ TD | 7$\times$7 | 7$\times$7 | 7$\times$7 | 6$\times$6 | 6$\times$6 |
| Stretching temperature | °C | 115 | 115 | 115 | 115 | 115 |

(continued)

| Production condition | | | | | | |
|---|---|---|---|---|---|---|
| Heat fixing temperature | °C | 125 | 125 | 125 | 125 | 125 |
| Heat fixing time | min | 10 | 10 | 10 | 10 | 10 |

[Table 2]

| Comparative Example No | | Comparative Example 1 | Comparative Example 2 | Comparative Example 3 | Comparative Example 4 |
|---|---|---|---|---|---|
| Resin composition | | | | | |
| Content of high density PE | Part by mass | 70 | 70 | 70 | 70 |
| Mw of high density PE | $\times 10^5$ | 2.8 | 2.8 | 2.8 | 2.8 |
| Content of ultra-high molecular weight PE | Part by mass | 30 | 30 | 30 | 30 |
| Mw of ultra-high molecular weight PE | $\times 10^5$ | 25 | 20 | 33 | 25 |
| Melting point of ultra-high molecular weight PE | °C | 138.0 | 140.5 | 143.7 | 138.0 |
| Heat of fusion of ultra-high molecular weight PE | J/g | 178 | 188 | 205 | 178 |
| Blending ratio (mass ratio) of polyolefin resin/film-forming solvent | - | 25/75 | 25/75 | 20/80 | 20/80 |
| Production condition | | | | | |
| Kneading method | | Dividing addition | Dividing addition | Bulk addition | Dividing addition |
| rotation speed during kneading | rpm | 150 | 150 | 50 | 150 |
| Kneading temperature | °C | 180 | 180 | 190 | 180 |
| Kneading time | min | 10 | 10 | 10 | 20 |
| Stretching method | | Simultaneous Biaxial | Simultaneous Biaxial | Simultaneous Biaxial | Simultaneous Biaxial |
| Stretching ratio | MD $\times$ TD | 7×7 | 5×5 | 6×6 | 6×6 |
| Stretching temperature | °C | 115 | 115 | 115 | 115 |
| Heat fixing temperature | °C | 125 | 125 | 125 | 125 |
| Heat fixing time | min | 10 | 10 | 10 | 10 |

[Table 3]

| Example No | | Example 1 | Example 2 | Example 3 | Example 4 | Example 5 |
|---|---|---|---|---|---|---|
| Appearance of porous polyolefin film | | good | good | good | good | good |
| Physical property of porous polyolefin film | | | | | | |
| MD tan δ peak temperature | °C | 108 | 108 | 108 | 113 | 115 |
| TD tan δ peak temperature | °C | 109 | 109 | 113 | 112 | 115 |
| MD tan δ peak value | | 0.54 | 0.53 | 0.50 | 0.50 | 0.48 |
| TD tan δ peak value | | 0.53 | 0.52 | 0.50 | 0.50 | 0.48 |
| Film thickness | μm | 10 | 12 | 9 | 13 | 12 |
| Porosity | % | 47 | 47 | 45 | 48 | 50 |
| Air permeation resistance in terms of 20 μm | sec/100 cm$^3$ | 230 | 210 | 300 | 195 | 183 |
| Puncture strength in terms of porosity 50% and 20 μm | N | 7.9 | 6.5 | 7.4 | 5.5 | 5.8 |
| MD maximum melt shrinkage rate | % | 11 | 10 | 17 | 16 | 14 |
| TD maximum melt shrinkage rate | % | 15 | 15 | 14 | 7 | 15 |
| MD tensile strength at break | MPa | 196 | 159 | 194 | 151 | 131 |
| TD tensile strength at break | MPa | 185 | 170 | 186 | 148 | 137 |
| Average tensile strength at break | MPa | 191 | 164 | 190 | 150 | 134 |
| MD tensile elongation at break | % | 103 | 102 | 91 | 105 | 109 |
| TD tensile elongation at break | % | 109 | 96 | 76 | 109 | 94 |
| Average tensile elongation at break | % | 106 | 99 | 84 | 107 | 101 |
| MD tensile strength at break × MD tensile elongation at break | MPa×% | 20660 | 16530 | 18030 | 15890 | 14315 |
| TD tensile strength at break × TD tensile elongation at break | MPa×% | 20630 | 16690 | 14500 | 16106 | 12833 |
| Average tensile strength at break × average tensile elongation at break | MPa×% | 20645 | 16610 | 16265 | 15998 | 13574 |
| Maximum flow pore diameter | nm | 38 | 43 | 39 | 46 | 46 |
| Mean flow pore diameter | nm | 25 | 24 | 24 | 29 | 30 |
| Average pore diameter | nm | 63 | 65 | 61 | 59 | 57 |

[Table 4]

| Comparative Example No | | Comparative Example 1 | Comparative Example 2 | Comparative Example 3 | Comparative Example 4 |
|---|---|---|---|---|---|
| Appearance of porous polyolefin film | | good | good | poor | good |
| Physical property of porous polyolefin film | | | | | |
| MD tan δ peak temperature | °C | 101 | 102 | | 102 |
| TD tan δ peak temperature | °C | 102 | 101 | | 99 |

(continued)

| Physical property of porous polyolefin film | | | | | |
|---|---|---|---|---|---|
| MD tan δ peak value | | 0.49 | 0.44 | | 0.42 |
| TD tan δ peak value | | 0.49 | 0.43 | | 0.41 |
| Film thickness | μm | 14 | 19 | | 10 |
| Porosity | % | 44 | 42 | | 43 |
| Air permeation resistance in terms of 20 μm | sec/100 cm³ | 295 | 294 | | 275 |
| Puncture strength in terms of porosity 50% and 20 μm | N | 7.1 | 5.5 | | 5.2 |
| MD maximum melt shrinkage rate | % | 35 | 25 | | 0.3 |
| TD maximum melt shrinkage rate | % | 34 | 27 | | 2.5 |
| MD tensile strength at break | MPa | 176 | 150 | | 129 |
| TD tensile strength at break | MPa | 192 | 127 | | 134 |
| Average tensile strength at break | MPa | 184 | 139 | Poor appearance | 130 |
| MD tensile elongation at break | % | 125 | 129 | | 100 |
| TD tensile elongation at break | % | 115 | 159 | | 105 |
| Average tensile elongation at break | % | 120 | 144 | | 103 |
| MD tensile strength at break × MD tensile elongation at break | MPa×% | 22004 | 22294 | | 12907 |
| TD tensile strength at break × TD tensile elongation at break | MPa×% | 22093 | 26522 | | 14078 |
| Average tensile strength at break × average tensile elongation at break | MPa×% | 22048 | 24408 | | 13492 |
| Maximum flow pore diameter | nm | 54 | 55 | | 51 |
| Mean flow pore diameter | nm | 23 | 30 | | 29 |
| Average pore diameter | nm | 67 | 66 | | 59 |

As shown in Table 3 and Table 4, in Examples, by adding resins divided to portions or kneading for a long time, a porous polyolefin film having a good appearance and an excellent balance between strength and shrinkage rate, which contained an ultra-high molecular weight polyethylene resin having high crystallinity and a high melting point, was obtained.

On the other hand, in Comparative Examples 1 and 4, since the ultra-high molecular weight polyethylene resin used had low crystallinity and a low melting point, a porous polyolefin film having a good appearance was obtained, but strength and shrinkage rate could not be achieved at the same time. Also in Comparative Example 2, since the stretching was performed at a low ratio, strength and shrinkage rate could not be achieved at the same time. In Comparative Example 3, an ultra-high molecular weight polyethylene resin having high crystallinity and a high melting point was used, but since the raw materials were added all at once and kneading is insufficient, the unmelted resin was scattered and the appearance was poor. Further, the mean flow pore diameter was clearly small and it is confirmed that the pore diameter of the porous polyolefin film was reduced.

Although the present invention has been described in detail with reference to a specific embodiment, it will be apparent to those skilled in the art that various changes and modifications can be made without departing from the spirit and the scope of the present invention. The present application is based on Japanese Patent Application No. 2018-211518 filed on November 9, 2018, and Japanese Patent Application No. 2018-211519 filed on November 9, 2018, contents of which are incorporated herein by reference.

INDUSTRIAL APPLICABILITY

The porous polyolefin film according to the present invention can be particularly preferably used for a secondary battery such as a non-aqueous electrolyte type secondary battery represented by a lithium ion secondary battery, because of having excellent mechanical strength and shape maintenance characteristics under high temperature or high tension.

**Claims**

1. A porous polyolefin film, wherein a peak temperature of tan $\delta$ of a dynamic viscoelasticity measured at a frequency of 1 Hz, a temperature rising rate of 5°C/min, and a strain rate of 0.1%/sec is 105°C or higher in at least one direction of a MD direction (machine direction) and a TD direction (transverse direction).

2. The porous polyolefin film according to claim 1, wherein the peak temperature of the tan $\delta$ is 107°C or higher in at least one direction of the MD direction (machine direction) and the TD direction (transverse direction).

3. The porous polyolefin film according to claim 1 or 2, wherein a peak value of the tan $\delta$ is 0.45 or more and 0.60 or less in at least one direction of the MD direction (machine direction) and the TD direction (transverse direction).

4. The porous polyolefin film according to any one of claims 1 to 3, wherein a maximum flow pore diameter is 10 nm or more and 50 nm or less.

5. The porous polyolefin film according to any one of claims 1 to 4, wherein an average pore diameter of a surface obtained by image analysis is 10 nm or more and 100 nm or less.

6. The porous polyolefin film according to any one of claims 1 to 5, wherein puncture strength in terms of a porosity of 50% and a film thickness of 20 $\mu$m is 5.5 N or more.

7. The porous polyolefin film according to any one of claims 1 to 6, wherein an average tensile strength at break, which is an average value of a tensile strength at break in the machine direction (MD direction) and a tensile strength at break in the transverse direction (TD direction), is 140 MPa or more, an average tensile elongation at break, which is an average value of a tensile elongation at break in the MD direction and a tensile elongation at break in the TD direction, is 90% or more, and the average tensile strength at break (MPa) $\times$ the average tensile elongation at break (%) is 15,000 (MPa$\times$%) or more.

8. The porous polyolefin film according to any one of claims 1 to 7, wherein the porosity is 40% or more.

9. The porous polyolefin film according to any one of claims 1 to 8, wherein a maximum melt shrinkage rate in the transverse direction (TD direction) is 1% or more and 25% or less.

10. The porous polyolefin film according to any one of claims 1 to 9, comprising a polyethylene resin as a main component.

11. The porous polyolefin film according to claim 10, wherein the polyethylene resin is a mixture of a high density polyethylene resin and an ultra-high molecular weight polyethylene resin.

12. The porous polyolefin film according to claim 11, wherein the ultra-high molecular weight polyethylene resin has a melting point of 140°C or higher.

**13.** A battery separator using the porous polyolefin film according to any one of claims 1 to 12.

**14.** A secondary battery using the battery separator according to claim 13.

FIG. 1

**Dynamic Viscoelasticity Measurement**

Peak value of tan δ

tanδ

Peak temperature of tan δ

tempurture(℃)

## INTERNATIONAL SEARCH REPORT

| International application No. |
|---|
| PCT/JP2019/044011 |

### A. CLASSIFICATION OF SUBJECT MATTER
C08J 9/28(2006.01)i; H01M 2/16(2006.01)i
FI: H01M2/16 P; C08J9/28 CES

According to International Patent Classification (IPC) or to both national classification and IPC

### B. FIELDS SEARCHED

Minimum documentation searched (classification system followed by classification symbols)
C08J9/28; H01M2/16

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 7-268118 A (MITSUI SEKIYU KAGAKU KOGYO KABUSHIKI KAISHA) 17.10.1995 (1995-10-17) claims, examples | 1-14 |
| A | JP 8-034873 A (MITSUI SEKIYU KAGAKU KOGYO KABUSHIKI KAISHA) 06.02.1996 (1996-02-06) claims, examples | 1-14 |
| A | JP 2015-170394 A (NITTO DENKO CORP.) 28.09.2015 (2015-09-28) claims, examples | 1-14 |
| A | JP 2016-072155 A (ASAHI KASEI E-MATERIALS CORP.) 09.05.2016 (2016-05-09) claims, examples | 1-14 |
| A | JP 2012-092302 A (MITSUBISHI PLASTICS, INC.) 17.05.2012 (2012-05-17) claims, examples | 1-14 |
| A | JP 2002-503621 A (RHODIA CHIMIE) 05.02.2002 (2002-02-05) claims, examples | 1-14 |

☐ Further documents are listed in the continuation of Box C.     ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15 January 2020 (15.01.2020) | 28 January 2020 (28.01.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT
Information on patent family members

International application No.

PCT/JP2019/044011

| Patent Documents referred in the Report | Publication Date | Patent Family | Publication Date |
|---|---|---|---|
| JP 7-268118 A | 17 Oct. 1995 | (Family: none) | |
| JP 8-034873 A | 06 Feb. 1996 | (Family: none) | |
| JP 2015-170394 A | 28 Sep. 2015 | (Family: none) | |
| JP 2016-072155 A | 09 May 2016 | (Family: none) | |
| JP 2012-092302 A | 17 May 2012 | JP 2016-40386 A claims, examples | |
| JP 2002-503621 A | 05 Feb. 2002 | JP 2002-503621 A claims, examples WO 1999/041210 A1 FR 2774702 A1 CN 1290238 A KR 10-2001-0040934 A | |

Form PCT/ISA/210 (patent family annex) (January 2015)

**REFERENCES CITED IN THE DESCRIPTION**

**Patent documents cited in the description**

- JP 2016507877 A
- JP 2017165938 A
- JP 2132327 A
- JP 3347835 B
- JP 2002256099 A
- JP 2018211518 A
- JP 2018211519 A